**Europäisches Patentamt**

**European Patent Office**

**Office européen des brevets**

(19)

(11) Veröffentlichungsnummer: **0 064 477 B1**

(12) # EUROPÄISCHE PATENTSCHRIFT

(45) Veröffentlichungstag der Patentschrift:
**07.01.87**

(21) Anmeldenummer: **82810158.4**

(22) Anmeldetag: **14.04.82**

(51) Int. Cl.⁴: **G 01 S 3/80**

(54) Verfahren und Anlage zur Ortung von Knallen.

(30) Priorität: **23.04.81 CH 2666/81**

(43) Veröffentlichungstag der Anmeldung:
**10.11.82 Patentblatt 82/45**

(45) Bekanntmachung des Hinweises auf die Patenterteilung:
**07.01.87 Patentblatt 87/2**

(84) Benannte Vertragsstaaten:
**AT DE FR GB IT SE**

(56) Entgegenhaltungen:
**EP - A - 0 019 428**
**DE - B - 2 922 429**
**DE - C - 703 381**
**FR - A - 2 121 450**
**FR - A - 2 231 013**
**US - A - 3 707 699**
**US - A - 3 984 803**
**US - A - 4 305 142**

(73) Patentinhaber: **Loeliger, Niklaus, Riedhofstrasse 378, CH-8049 Zürich (CH)**

(72) Erfinder: **Loeliger, Niklaus, Riedhofstrasse 378, CH-8049 Zürich (CH)**

(74) Vertreter: **Haffter, Tobias Fred, Dr. Dipl.-Phys. et al, PATENTANWALTS-BUREAU ISLER AG Postfach 6940 Walchestrasse 23, CH-8023 Zürich (CH)**

## Beschreibung

Die Erfindung bezieht sich auf ein Verfahren zur Ortung von Knallen gemäss Oberbegriff von Anspruch 1 sowie auf eine Anlage zur Ausführung dieses Verfahrens gemäss Oberbegriff von Anspruch 11.

Schallortungssysteme dieser Art sind seit längerer Zeit bekannt und eingeführt. So sind insbesondere mit dem Aufkommen der elektrischen Messwertübertragung Systeme entstanden, die sich das Prinzip zu Nutze gemacht haben, dass aus Laufzeitdifferenzen des Schalles, gemessen an zwei auseinanderliegenden Messpunkten, von diesen zwei Messpunkten aus der geometrische Ort konstruiert werden kann, auf welchem alle Punkte mit der gleichen Laufzeit-Differenz liegen. Dieser Ort ist eine Hyperbel. Gelingt es, für den gleichen Knall mindestens zwei derartige geometrische Orte aus mindestens drei Messpunkten zu konstruieren, so liegt der Knallentstehungsort auf dem Schnittpunkt dieser beiden geometrischen Orte.

Viele bekannte Vorschläge, z.B. gemäss DE-C-703 381, beziehen sich darauf, die Auswertung bis zur Bildung dieses Schnittpunktes von zwei, drei oder mehreren geometrischen Orten mittels mechanischer oder elektrischer Hilfsmittel zu vereinfachen, ohne am Prinzip der Hyperbelbildung etwas zu verändern. Beim Vorschlag gemäss DE-C-703 381 ist bei jeder Messstelle einem Hauptmikrophon ein Nebenmikrophon zugeordnet, welches normalerweise gesperrt ist. Eine kurze Zeitspanne nach Eintreffen der Schallfront am Hauptmikrophon wird das Nebenmikrophon aktiviert und nach einer weiteren kurzen Zeitspanne wieder abgeschaltet. Es gelingt damit, von sämtlichen an der Messstelle eintreffenden Knallsignalen nur jene der Auswertung zuzuführen, welche aus einem vorbestimmten Sektor eintreffen. Bei der anschliessenden Auswertung im Hyperbelschnittverfahren, welche im Allgemeinen zwei Hyperbelschnittpunkte liefert, kann dann die Knallquelle eindeutig geortet werden.

Aus der US-A-3 707 699 ist ferner ein Verfahren zur Ortung des Einschlages von Bomben oder Granaten in einem Übungszielgebiet bekannt. Vier Messstellen mit je einem seismischen Fühler sind um das Zielgebiet herum angeordnet und genau vermessen. Aus den Zeitdifferenzen des Eintreffens der seismischen Schwingungen bei den Fühlern werden wiederum Hyperbeln gebildet und miteinander geschnitten. Die Patentschrift zeigt im Detail eine Möglichkeit zum elektronischen Bestimmen der Zeitdifferenzen.

Vereinzelt sind auch Bestrebungen ersichtlich, bei Dauergeräuschen mit spezieller Anordnung von mehreren Mikrophonen und Ausnützung der Phasenverschiebungen das Intensitätsmaximum und somit eine definierbare Schalleinfallsrichtung zu bestimmen. Dieses Verfahren ist aber nur bei Dauergeräuschen brauchbar, wie sie beispielsweise von Unterseebooten erzeugt werden. Ein Beispiel dazu zeigt die FR-A-2 231 013, bei welcher versucht wird, Flugzeuge nach ihrem emittierten Geräusch zu orten, wobei der Dopplereffekt kompensiert werden soll. Auch die Funkpeilung arbeitet bei elektronisch drehbaren Antennen nach diesem Prinzip. Auch sie setzt ein Dauersignal voraus, denn zur Ermittlung der Phasenverschiebung muss das Signal an den beiden Empfängern gleichzeitig vorhanden sein. Ausserdem setzen diese Peilverfahren voraus, dass das Signal hochgradig periodisch ist, denn sonst lässt sich eine Phasenverschiebung nicht feststellen. Beide Bedingungen sind bei der Knallortung nicht erfüllt.

Allen bekannten Verfahren zur Knallortung haftet der Nachteil an, dass die richtige Zuordnung der an verschiedenen Orten registrierten Druckschwingungen zum gleichen, einzumessenden Knall mit der notwendigen Sicherheit gegeben sein muss, um aus jeweils zwei weit auseinanderliegenden Messorten die entsprechenden geometrischen Orte konstruieren zu können. Diese Sicherheit ist dann nicht mehr gegeben, wenn Druckschwingungen von zwei oder mehr Entstehungsorten, welche weit auseinanderliegen können, gleichzeitig, das heisst innerhalb eines Zeitraumes von 0 bis 10 oder 20 Sekunden, an den verschiedenen Messpunkten eintreffen. Dies ist nicht nur häufig der Fall, sondern wird insbesondere bei der Artillerie und insbesondere zum Zwecke der Schalltarnung in vielen Armeen geschult und angewendet. Schalltarnung heisst in militärischen Fachkreisen dasjenige Abfeuern von Geschützen, welches es dem Gegner erschwert oder verunmöglicht, mit dem oben beschriebenen Verfahren die Feuerstellungen zu orten.

Nach den zurzeit üblichen Verfahren werden auf einer Basis von 8 bis 14 km Länge, welche möglichst rechtwinklig zu der erwarteten Schalleinfallsrichtung angeordnet ist, eine Anzahl von Mikrophonen so angeordnet, dass üblicherweise ein Abstand von 1 bis 3 km zwischen den einzelnen Mikrophonen entsteht. Dadurch entsteht der weitere gravierende Nachteil, dass jedes Mikrophon für sich sehr genau koordinatenmässig vermessen werden muss, da ein direktes gegenseitiges Vermessen nicht möglich ist und dennoch ein koordinatenmässiger Fehler von höchstens $+/-$ 1 Meter vorliegen darf, damit nicht untragbare Auswertefehler entstehen. Dies führt dazu, dass ein Hauptproblem beim Aufbau von Ortungssystemen darin liegt, rasch genug die verschiedenen Messpunkte mit der geforderten Genauigkeit zu vermessen. In den wenigsten Fällen sind die topographisch genau vermessenen Punkte zur Verfügung, und der personelle und der zeitliche Aufwand ist enorm.

Der vorliegenden Erfindung liegt die Aufgabe zugrunde, die Bildung eines geometrischen Ortes für die Schallortung ohne Einbusse an Genauigkeit zu vereinfachen und von der Voraussetzung zu lösen, dass nur ein einziger oder ganz wenige Knalle bzw. Schallentstehungsorte im gleichen Zeitraum zu registrierten Schalldruckschwingungen an den verschiedenen Messstellen führen.

Erfindungsgemäss wird diese Aufgabe durch das Verfahren der eingangs genannten Art gelöst, das die im kennzeichnenden Teil des Patentanspruchs 1 angeführten Merkmale aufweist.

Die Erfindung bezieht sich auch auf eine Anlage zur Ausführung dieses Verfahrens gemäss Oberbegriff von Anspruch 11. Die erfindungsgemässe Anlage weist die im Kennzeichen des Anspruchs 11 angeführten Merkmale auf.

Ausführungsbeispiele der Erfindungsgegenstände werden nachfolgend anhand der Zeichnungen erläutert. Es zeigen:

Fig. 1 ein Blockschema einer Messstelle mit drei Mikrophonen,

Fig. 2 eine schematische Darstellung einer Anlage mit drei Messstellen,

Fig. 3 ein Blockschema einer Auswertestelle.

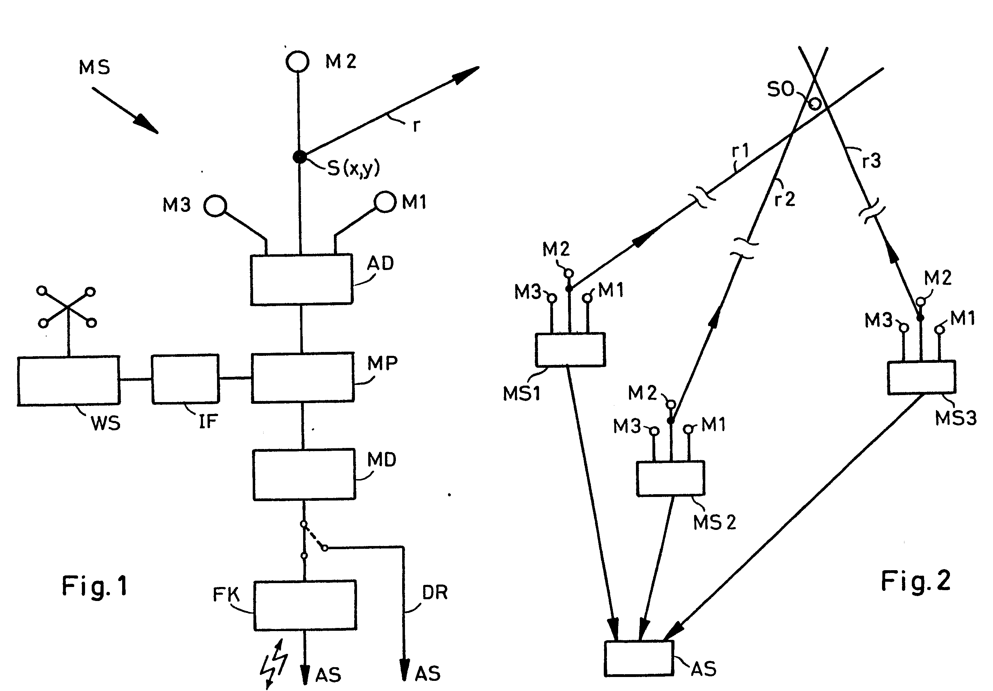

Bei der in Fig. 1 schematisch dargestellten Messstelle MS sind drei Mikrophone M1, M2 und M3 angeordnet, und zwar verhältnismässig, d.h. im Vergleich zum Schallausbreitungsradius, nahe beieinanderliegend in den Eckpunkten eines horizontalen gleichseitigen Dreiecks, dessen Seitenlängen 5 bis 30 m betragen. Die Abweichungen von diesen Sollabständen soll weniger als 1,5 cm betragen. Die Orientierung dieser bestimmten Anordnung der drei Mikrophone M1, M2, M3 in bezug auf die Nordrichtung soll auf mindestens 0,5 Artilleriepromille (0,5 mrad) genau erfolgen. Die drei Mikrophone M1, M2, M3 sind an einen Analog-Digitalumsetzer AD angeschlossen, dessen digitale Ausgangssignale einem Mikroprozessor MP zugeführt sind.

Der Mikroprozessor MP ist dazu ausgebildet und programmiert, unabhängig von den Messwerten einer anderen von mehreren, vorzugsweise gleichartigen Messstellen aus den durch die eintreffenden Schalldruckschwingungen eines Knalles erzeugten Mikrophonsignalen bzw. den Ausgangssignalen des Analog-Digitalumsetzers AD für den betreffenden Knall eine Schalleinfallszeit und eine Schalleinfallsrichtung zu bestimmen. Eine Datenübertragungseinrichtung oder ein Modem MD übernimmt die digitalen Informationen des Mikroprozessors MP betreffend Schalleinfallszeit und Schalleinfallsrichtung und wandelt sie in modulierte Wechselstromsignale um. Die letzteren werden entweder über ein Funkgerät FK oder über eine Drahtleitung DR an eine anhand der Fig. 2 noch zu erläuternde Auswertestelle AS übermittelt.

Im Mikroprozessor MP aktiviert das Signal des dem Entstehungsort der Schalldruckschwingungen nächstgelegenen Mikrophons die Messstelle MS, d.h. einen Speicher- und Rechenvorgang im Mikroprozessor MP. Im Mikroprozessor MP werden nach dieser Aktivierung die von den drei Mikrophonen M1, M2, M3 eintreffenden Schalldruckschwingungssignale unter Berücksichtigung ihrer zeitlichen Differenzen gespeichert, wobei die genaue Uhrzeit des Eintreffens der Schalldruckschwingungen an dem die Aktivierung bewirkenden Mikrophon, z.B. dem Mikrophon M1, festgehalten wird. Im Mikroprozessor wird hierauf durch zeitliche Verschiebung der Messwerte der weiteren Mikrophone M2 und M3 Kongruenz mit dem Messwert des Mikrophons M1 erzeugt, so dass die genauen Zeitdifferenzen des Eintreffens der Schalldruckschwingungen des Knalls an den Mikrophonen M1, M2, M3 der Messstelle MS ermittelt werden. Der Mikroprozessor MP errechnet aus diesen Zeitdifferenzen aufgrund eines einfachen, an sich bekannten trigonometrischen Rechenprogramms die Schalleinfallsrichtung r im Mittel- oder Schwerpunkt S mit den Koordinaten x und y der Messstelle MS und somit einen geometrischen Ort. Die Schalleinfallsrichtung r, die genaue Uhrzeit des Schalleinfalls am Mikrophon M1 und die Bezeichnung der Messstelle MS, z.B. die genannten Koordinaten x und y, werden als Datensatz entweder über das Funkgerät FK oder die Drahtleitung DR an die Auswertestelle AS übermittelt. Zu diesem zu übermittelnden Datensatz können noch weitere Messwerte beigefügt werden, z.B. Daten über die im Zeitpunkt des Eintreffens der Schalldruckschwingungen an der Messstelle MS herrschende Windstärke und Windrichtung. Entsprechende Messwerte werden mit Hilfe einer Wetterstation WS gewonnen und über eine Trennstelle IF (Interface) dem Mikroprozessor MP zugeführt. Ferner können dem zu übermittelnden Datensatz in kodierter Form z.B. Informationen über die Klassifikation der eingetroffenen Schalldruckschwingungen nach vermutlichem Kaliber eines den Knall erzeugenden Geschützes beigefügt werden, wobei entsprechende elektronische Einrichtungen zur Analyse und Klassifikation der Schallschwingungen in Fig. 1 nicht dargestellt sind.

Der Umstand, dass die Mikrophone M1, M2, M3 in geringen gegenseitigen Abständen von bloss einigen Metern angeordnet sind, hat zur Folge, dass eine eintreffende Schalldruckschwingung, wie sie beispielsweise von einem feuernden Geschütz erzeugt wird, an allen diesen Mikrophonen in der gleichen Form vorliegt. Dies ermöglicht es, die Zeitdifferenzen des Eintreffens der Schalldruckschwingungen an den verschiedenen Mikrophonen mit hoher Genauigkeit zu ermitteln, wozu die in einem Mikroprozessor in bekannter Weise enthaltenen elektronischen Schaltungen die bezüglich zeitlicher Auflösung geeigneten Mittel sind. Somit lassen sich zeitliche Verschiebungen der eintreffenden Schalldruckschwingungen in der Grössenordnung von Tausendstel- bis Hundertstelsekunden ohne Fehler zufolge unterschiedlicher Schalldruckschwingungsformen oder mangelnder Auflösung von Zeitmesseinrichtungen erfassen und bestimmen, was bei den bekannten Verfahren und Anlagen wegen der bis zu Tausenden von Metern betragenden Abständen der Mikrophone und wegen der unzulänglichen Zeiterfassungsmittel nicht möglich ist. Die vorliegende Ausbildung der Messstelle MS erlaubt es zufolge ihres zeitlichen Auflösevermögens auch, Schalldruckschwingungen auszuwerten, die von mehreren Knallen herrühren, welche mit einem zeitlichen Abstand von bloss einer Hundertstelsekunde an der Messstelle MS eintreffen.

In einer Ausführungsform kann über den Mikrophonen M1, M2, M3 der Messstelle MS in einer Höhe von 2 bis 10 m ein weiteres, nicht dargestelltes Mikrophon angebracht werden, welches ebenfalls mit dem Mikroprozessor MP in Verbindung steht. Das Signal dieses weiteren Mikrophons bewirkt dann, wenn es eintreffende Schalldruckschwingungen früher registriert als die anderen Mikrophone M1, M2 und M3, eine Unterbrechung der Auswertung dieser Schalldruckschwingungen im Mikroprozessor MP und eine Löschung der diesbezüglich gespeicherten Daten.

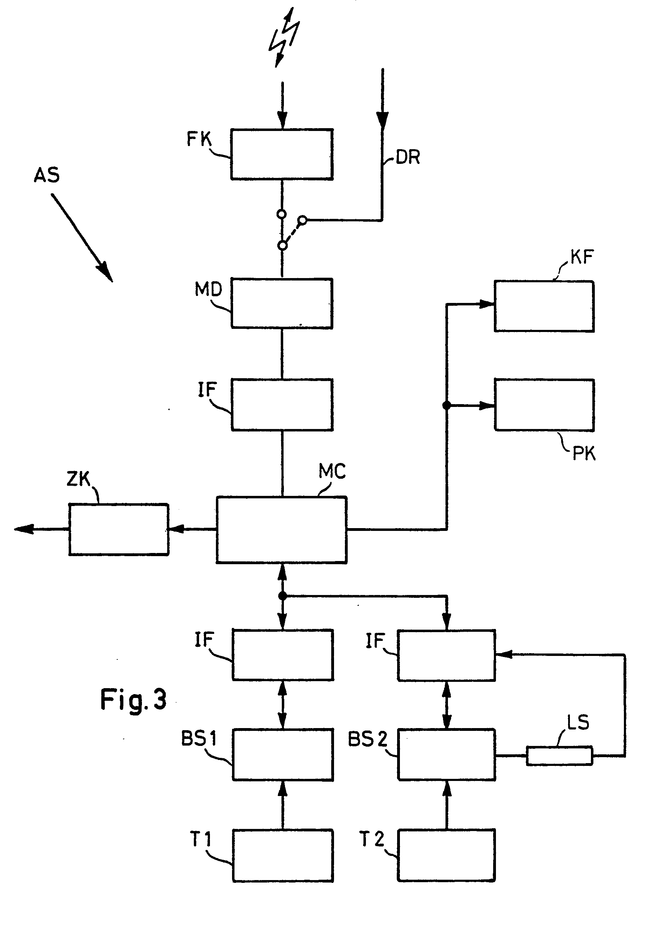

Eine Anlage zur Ortung von Knallen weist mehrere, d.h. mindestens zwei Messstellen auf, wie sie beispielsweise anhand der Fig. 1 erläutert worden sind, sowie eine Auswertestelle, in welcher die von den Messstellen übermittelten Datensätze ausgewertet werden. In Fig. 2 ist eine derartige Anlage mit drei Messstellen MS1, MS2 und MS3 schematisch dargestellt, wobei jede dieser Messstellen entsprechend Fig. 1 ausgebildet sein kann und jeweils drei Mikrophone M1, M2, M3 enthält. Durch jede Messstelle MS1, MS2, MS3, welche einen entsprechenden Schwerpunkt S1, S2, S3 mit den Koordinaten x1, y1 bzw. x2, y2 bzw. x3, y3 hat, werden in der erläuterten Weise für jeden festgestellten Knall eine Schalleinfallsrichtung r1 bzw. r2 bzw. r3 sowie die entsprechende Schalleinfallszeit ermittelt und als Datensatz mittels Funk oder drahtgebunden an die Auswertestelle AS übermittelt. In der Auswertestelle AS wird an erster Stelle aus den Schnittpunkten der Schalleinfallsrichtungen r1, r2 und r3, den korrelierten Schalleinfallszeiten und den Koordinaten der Schwerpunkte S1, S2, S3 der Schallentstehungsort SO ermittelt. Der prinzipielle Aufbau einer Auswertestelle zur Erzielung verschiedenartiger Auswerteresultate ist in Fig. 3 schematisch dargestellt.

Gemäss Fig. 3 werden die übermittelten Datensätze von einem Funkgerät FK bzw. über die Drahtleitung DR empfangen und einer Datenübertragungseinrichtung oder einem Modem MD zugeführt, welches die empfangenen modulierten Wechselstromsignale in digitale Informationssignale umwandelt. Ein über eine Trennstelle IF (Interface) an das Modem MD angeschlossener Minicomputer MC errechnet aufgrund der erhaltenen Datensätze selbsttätig alle Schallentstehungsorte, z.B. deren Koordinaten und führt sie samt den zugehörigen, errechneten Uhrzeiten der Schallentstehung, d.h. der Knalle, in chronologischer Reihenfolge in einer Protokolleinheit PK ein, wo diese errechneten Knallentstehungsdaten z.B. in gedruckter Form gespeichert werden. Gleichzeitig kann aufgrund von in den Messstellen durch die erwähnte Analyse der Schalldruckschwingungen ermittelten und an die Auswertestelle übertragenen Klassifikationsdaten eine Klassifikation der registrierten Knalle nach der Art ihres Verlaufs vorgenommen und gespeichert werden, wozu eine schematisch dargestellte Einrichtung KF vorgesehen ist.

Da der von den Messstellen erfasste Ortungsbereich praktisch 360° umfasst, kann nicht nur der ganze Ortungsbereich auf einem Bildschirm visuell dargestellt werden, sondern es können auch einzelne Geländeabschnitte oder auch einzelne Schallentstehungsorte, also die Feuertätigkeit einer gegnerischen Feuereinheit, ausgewählt werden. Hierzu ist über eine entsprechende Trennstelle IF (Interface) eine erste Bildschirmeinheit BS1, die mit einer Tastatur T1 versehen ist, an den Minicomputer MC angeschlossen. Mittels der Tastatur T1 können auf dem Bildschirm der Einheit BS1 Übersichtsdarstellungen der Schallentstehungsorte, geordnet einerseits in bestimmte Zeitabschnitte und andererseits nach Geländeabschnitten, ausgewählt werden.

Hierzu ist der Minicomputer MC derart ausgebildet, dass die Auswertung der von den verschiedenen Messstellen MS1, MS2, MS3 empfangenen Daten geordnet nach einander überlappenden Zeitabschnitten und nach aneinander angrenzenden Feldern des zu überwachenden Geländes erfolgt. Ein derartiger Zeitabschnitt kann 1 bis 10 Sekunden betragen, wobei die Überlappung zwischen je zwei Zeitabschnitten zwischen 0,1 und 2 Sekunden liegt. Die zu überwachenden Geländeabschnitte sind beispielsweise in 3 bis 24 angenähert rechteckige Felder eingeteilt. Für alle ein bestimmtes, durch die Tastatur T1 ausgewähltes Feld berührenden Einfallsrichtungen wird im Minicomputer MC errechnet, ob ein annähernd gleicher Schallentstehungszeitpunkt in diesem Feld für mehr als eine Messstelle vorliegt. Bei Vorliegen eines annähernd gleichen Schallentstehungszeitpunktes werden, wie bereits erwähnt, die Koordinaten des Schnittpunktes der betreffenden Einfallsrichtungen zusammen mit der Uhrzeit der Schallentstehung der Bildschirmeinheit BS1 und auch der Protokolleinheit PK zugeführt.

Zur visuellen Darstellung der Schallentstehungsorte kann auch eine über eine Trennstelle IF (Interface) an den Minicomputer MC angeschlossene und mit einer Tastatur T2 versehene Bildschirmeinheit BS2 vorgesehen, auf welcher nicht nur Schallentstehungsorte in bestimmten, mittels der Tastatur T2 ausgewählte Geländeabschnitten dargestellt werden können, sondern darüber hinaus bestimmte Schallentstehungsorte auf dem Bildschirm der Bildschirmeinheit BS2 mittels eines Leuchtstifts LS in an sich bekannter Weise ausgewählt werden können. Das vom Leuchtstift LS entsprechend erzeugte Signal ist zum Minicomputer MC zurückgeführt und erlaubt es insbesonders, die errechneten und abgetasteten Schallentstehungskoordinaten, die während einer vorher durch Betätigung der Tastatur T2 bestimmten Zeitdauer und aus einem vorher durch Betätigung der Tastatur T2 bestimmten Geländeabschnitt, beispielsweise dem Wirkungsbereich der eigenen, weittragenden Batterien, geortet werden, unmittelbar über eine Zielkoordinateneinheit ZK der eigenen Feuerleitung zu übermitteln.

Wie bereits erwähnt, werden in den Messstellen die an die Auswertestelle übermittelten Datensätze nötigenfalls mit Zusatzinformationen, z.B. bezüglich Windstärke, Windrichtung und Art der Schalldruckschwingungen versehen. Dadurch kann bei der nachfolgenden Auswertung im Minicomputer der Auswertestelle die Einbeziehung solcher Zusatzinformationen eine Erhöhung der Sicherheit bei annähernd gleichen Koordinaten der Schallentstehungsorte zeitlich aufeinanderfolgender Knalle erzielt werden.

**Patentansprüche**

1. Verfahren zur Ortung von Knallen, bei welchem an mindestens zwei mit mindestens zwei Schalldetektoren (M1, M2, M3) ausgerüsteten Messstellen (MS; MS1, MS2, MS3) die Schalldruckschwingungen jedes Knalls erfasst, die Zeitdifferenzen des Eintreffens der Schalldruckschwingungen an den Schalldetektoren (M1, M2, M3) der gleichen Messstelle für jede Messstelle (MS; MS1, MS2, MS3) ermittelt und die entsprechenden Zeitdifferenzen an eine zentrale Auswertestelle (AS) zur Ermittlung des Entstehungsorts (SO) des Knalls weitergeleitet werden, dadurch gekennzeichnet, dass die Uhrzeit des Eintreffens der Schalldruckschwingungen jedes Knalls an den einzelnen Schalldetektoren (M1, M2, M3) jeder Messstelle (MS; MS1, MS2, MS3) festgestellt und gespeichert wird, dass die Zeitdifferenzen des Eintreffens der Schalldruckschwingungen an den Schalldetektoren (M1, M2, M3) der gleichen Messstelle (MS; MS1, MS2, MS3) nach der Ermittlung für jede Messstelle (MS) gespeichert werden, und dass am Ort jeder Messstelle (MS; MS1, MS2, MS3) aus den Uhrzeit- und Zeitdifferenzdaten die Schalleinfallsrichtung (r; r1, r2, r3) und die Schalleinfallszeit für die betreffende Messstelle (MS; MS1, MS2, MS3) elektronisch bestimmt werden, wonach diese Daten an die zentrale Auswertestelle (AS) zur Ermittlung des Schallentstehungsortes (SO) und des Schallentstehungszeitpunkts übertragen werden.

2. Verfahren nach Anspruch 1, dadurch gekennzeichnet, dass an jeder Messstelle (MS; MS1, MS2, MS3) drei Mikrophone (M1, M2, M3) in einer bestimmten geometrischen Anordnung angebracht werden, z.B. in den Ecken eines horizontalen gleichseitigen Dreiecks mit einer Seitenlänge von 5 bis 30 Metern, und dass die Anordnung bezüglich der Nordrichtung in bestimmter Weise orientiert wird.

3. Verfahren nach Anspruch 1 oder 2, dadurch gekennzeichnet, dass an jeder Messstelle (MS; MS1, MS2, MS3) die von den Schalldetektoren (M1, M2, M3) aufgenommenen Schalldruckschwingungen gespeichert werden, dass das Eintreffen der Schwingungen am dem Schallentstehungsort (SO) nächstgelegenen Schalldetektor (M2) die Messstelle (MS; MS3) aktiviert und daraus die Zeitdifferenzen zwischen dem Eintreffen der Schwingungen an diesem Schalldetektor (M2) und dem Eintreffen der gleichen Schwingungen an den übrigen Schalldetektoren (M1, M3) durch Verschiebung jeweils zweier gespeicherter Schalldruckschwingungen längs der Zeitachse bis zu deren mindestens angenäherten Überdeckung ermittelt werden.

4. Verfahren nach einem der Ansprüche 1 bis 3, dadurch gekennzeichnet, dass über jeder Messstelle (MS; MS1, MS2, MS3) ein weiterer Schalldetektor angeordnet wird, z.B. in einer Höhe von 2 bis 10 Metern über der Messstelle (MS; MS1, MS2, MS3), und dass dann, wenn die Schalldruckschwingungen am weiteren Schalldetektor früher eintreffen als an allen übrigen Schalldetektoren (M1, M2, M3) der gleichen Messstelle (MS; MS1, MS2, MS3), die Auswertung dieser Schalldruckschwingungen in dieser Messstelle (MS; MS1, MS2, MS3) unterbrochen und die gespeicherten Daten gelöscht werden.

5. Verfahren nach einem der Ansprüche 1 bis 4, dadurch gekennzeichnet, dass am Ort jeder Messstelle (MS; MS1, MS2, MS3) zusätzliche Daten ermittelt und an die zentrale Auswertestelle (AS) übertragen werden, z.B. Daten bezüglich Windstärke, Windrichtung und Art der eintreffenden Schalldruckschwingungen.

6. Verfahren nach einem der Ansprüche 1 bis 5, dadurch gekennzeichnet, dass zur Ermittlung der von jeder Messstelle (MS; MS1, MS2, MS3) an die zentrale Auswertestelle (AS) übertragenen Daten ein Mikroprozessor (MP) verwendet wird.

7. Verfahren nach einem der Ansprüche 1 bis 6, dadurch gekennzeichnet, dass die Übertragung der Daten von jeder Messstelle (MS; MS1, MS2, MS3) an die zentrale Auswertestelle (AS) mit Funk (FK) oder Draht (DR) erfolgt.

8. Verfahren nach einem der Ansprüche 1 bis 7, dadurch gekennzeichnet, dass die Auswertung der von jeder Messstelle (MS; MS1, MS2, MS3) übertragenen Daten in der zentralen Auswertestelle (AS) geordnet nach einander überlappenden Zeitabschnitten und nach aneinander angrenzenden Feldern des von den Messstellen (MS; MS1, MS2, MS3) erfassten Gebiets vorgenommen wird.

9. Verfahren nach Anspruch 8, dadurch gekennzeichnet, dass ein Zeitabschnitt eine Länge von 1 bis 10 Sekunden hat und die Überlappung von je zwei Zeitabschnitten 0,1 bis 2 Sekunden beträgt, und dass das erfasste Gebiet in 3 bis 24 annähernd rechteckige Felder unterteilt wird.

10. Verfahren nach Anspruch 8 oder 9, dadurch gekennzeichnet, dass für alle ein bestimmtes Feld berührende Schalleinfallsrichtungen (r; r1, r2, r3) der Schalldruckschwingungen in der zentralen Auswertestelle (AS) ermittelt wird, ob ein mindestens angenähert gleicher Schallentstehungszeitpunkt in diesem Feld für mehr als eine Messstelle vorliegt, und dass beim Vorliegen eines mindestens angenähert gleichen Schallentstehungszeitpunkts die Ortskennwerte, z.B. die Koordinaten, des Schnittpunkts der betreffenden Schalleinfallsrichtungen (r; r1, r2, r3) zusammen mit der ermittelten Uhrzeit der Schallentstehung einem Ausgabegerät, z.B. einem Bildschirm (BS1, BS2) und/oder einem Drucker (PK), zugeführt werden.

11. Anlage zur Ausführung des Knallortungsverfahrens nach Anspruch 1, mit mehreren, an verschiedenen Orten befindlichen Messstellen (MS; MS1, MS2, MS3), von welchen jede mindestens zwei in einer bestimmten Anordnung mit Abständen, die im Vergleich zur Entfernung des Entstehungsortes (SO) des Knalls sehr klein sind, angebrachte Schalldetektoren (M1, M2, M3), eine an die Schalldetektoren angeschlossene elektronische Einrichtung zur Bestimmung der Zeitdifferenzen des Eintreffens der Schalldruckschwingungen an den Schalldetektoren (M1, M2, M3) der gleichen Messstelle sowie Mittel (FK, DR) zur Übertragung der ermittelten Daten an eine zentrale Auswertestelle (AS) enthält, wobei die zentrale Auswertestelle (AS) Mittel zum Empfang der von jeder Messstelle (MS; MS1, MS2, MS3) übertragenen Daten, Mittel (BS1, BS2, PK) zur Registrierung der Ermittlungsresultate sowie Mittel zur Berechnung des Schallentstehungsortes (SO) enthält, dadurch gekennzeichnet, dass die elektronische Einrichtung jeder Messstelle (MS; MS1, MS2, MS3) jeweils aus einer integrierten elektronischen Rechen- und Speicherschaltung (MP) besteht, die auch zur Ermittlung der Uhrzeit des Eintreffens der Schalldruckschwingungen des Knalls an den Schalldetektoren (M1, M2, M3) und zur Ermittlung der Schalleinfallsrichtung (r; r1, r2, r3) ausgebildet ist, und dass die Auswertestelle (AS) eine weitere integrierte elektronische Rechen- und Speicherschaltung (MC) zur Ermittlung des Schallentstehungsortes (SO) und des Schallentstehungszeitpunktes für jeden Knall enthält.

## Claims

1. A method of taking bearings on sharp reports, in which the acoustic pressure oscillations from each report are picked up at at least two measuring points (MS; MS1, MS2, MS3) equipped with at least two sound detectors (M1, M2, M3), the time differences in the arrivals of the acoustic pressure oscillations at the sound detectors (M1, M2, M3) at the same measuring point are determined for each measuring point (MS; MS1, MS2, MS3) and the corresponding time differences are transmitted to one central evaluation point (AS) for the determination of the place of origin (SO) of the report, characterised in that the time of arrival of the acoustic pressure oscillations of each report at the individual sound detectors (M1, M2, M3) at each measuring point (MS; MS1, MS2, MS3) is established and stored, that the time differences in the arrivals of the acoustic pressure oscillations at the sound detectors (M1, M2, M3) at the same measuring point (MS; MS1, MS2, MS3) are stored after the determination for each measuring point (MS), and that at the location of each measuring point (MS; MS1, MS2, MS3) from the time data and time difference data the direction of incidence of the sound (r; r1, r2, r3) and the time of incidence of the sound for the measuring point (MS; MS1, MS2, MS3) in question are determined electronically, after which these data are transmitted to the central evaluation point (AS) for the determination of the place of origin of the sound (SO) and of the time of origin of the sound.

2. A method as in Claim 1, characterised in that at each measuring point (MS; MS1, MS2, MS3) three microphones (M1, M2, M3) are mounted in a certain geometric arrangement, e.g., at the corners of a horizontal equilateral triangle having a length of side of from 5 to 30 metres, and that the arrangement is oriented in a certain way with respect to the direction of North.

3. A method as in Claim 1 or 2, characterised in that at each measuring point (MS; MS1, MS2, MS3) the acoustic pressure oscillations picked up by the sound detectors (M1, M2, M3) are stored, that the arrival of the oscillations at the sound detector (M2) lying nearest to the place of origin (SO) of the sound activates the measuring point (MS; MS3) and from that the time differences between the arrival of the oscillations at this sound detector (M2) and the arrival of the same oscillations at the remaining sound detectors (M1, M3) are determined through shifting respectively two stored acoustic pressure oscillations along the time axis as far as their at least approximate coincidence.

4. A method as in one of the Claims 1 to 3, characterised in that above each measuring point (MS; MS1, MS2, MS3) one further sound detector is arranged, e.g., at a height of from 2 to 10 metres above the measuring point (MS; MS1, MS2, MS3), and that when the acoustic pressure oscillations arrive earlier at the further sound detector than at any other sound detector (M1, M2, M3) of the same measuring point (MS; MS1, MS2, MS3), the evaluation of these acoustic pressure oscillations at this measuring point (MS; MS1, MS2, MS3) is interrupted and the stored data are erased.

5. A method as in one of the Claims 1 to 4, characterised in that at the place of each measuring point (MS; MS1, MS2, MS3) additional data are determined and transmitted to the central evaluation point (AS) e.g., data with respect to wind strength, wind direction and the kind of acoustic pressure oscillations arriving.

6. A method as in one of the Claims 1 to 5, characterised in that for the determination of the data transmitted from each measuring point (MS; MS1, MS2, MS3) to the central evaluation point (AS) a microprocessor (MP) is employed.

7. A method as in one of the Claims 1 to 6, characterised in that the transmission of the data from each measuring point (MS; MS1, MS2, MS3) to the central evaluation point (AS) is effected by radio (FK) or wire (DR).

8. A method as in one of the Claims 1 to 7, characterised in that the evaluation of the data transmitted from each measuring point (MS; MS1, MS2, MS3) is performed with them arranged in order in the central evaluation point (AS) according to periods of time which overlap one another and according to fields which adjoin one another in the zone picked up by the measuring points (MS; MS1, MS2, MS3).

9. A method as in Claim 8, characterised in that one period of time has a length of from 1 to 10 seconds and the overlapping of every pair of periods of time amounts to from 0.1 to 2 seconds, and that the zone picked up is subdivided into from 3 to 24 approximately rectangular fields.

10. A method as in Claim 8 or 9, characterised in that for any direction of incidence of the sound (r; r1, r2, r3) of the acoustic pressure oscillations which touches a certain field it is determined in the central evaluation point (AS) whether at least approximately the same time of origin of the sound is present in this field for more than one measuring point, and that in the event of the presence of one at least approximately the same time of origin of the sound the characteristic values of the location, e.g., the coordinates of the point of intersection of the directions of incidence of the sound (r; r1, r2, r3) in question together with the determined time of origin of the sound are fed to an output apparatus, e.g., a display screen (BS1, BS2) and/or a printer (PK).

11. An installation for the execution of the method of taking bearings on sharp reports as in Claim 1, having a number of measuring points (MS; MS1, MS2, MS3) lying at different locations, each of which contains at least two sound detectors (M1, M2, M3) mounted in a certain arrangement at distances which are very short in comparison with the distance away of the place of origin (SO) of the sharp report, one electronic device connected to the sound detectors for the determination of the time differences in the arrivals of the acoustic pressure oscillations at the sound detectors (M1, M2, M3) at the same measuring point as well as means (FK, DR) of transmission of the data determined to a central evaluation point (AS), where the central evaluation point (AS) contains means of reception of the data transmitted from each measuring point (MS; MS1, MS2, MS3), means (BS1, BS2, PK) of recording the results of determination as well as means of calculation of the place of origin of the sound (SO), characterised in that the electronic device at each measuring point (MS; MS1, MS2, MS3) consists respectively of one integrated electronic computing and storage circuit (MP) which also is designed for the determination of the time of arrival of the acoustic pressure oscillations from the sharp report at the sound detectors (M1, M2, M3) and for the determination of the direction of incidence of the sound (r; r1, r2, r3), and that the evaluation point (AS) contains one further integrated electronic computing and storage circuit (MC) for the determination of the place of origin of the sound (SO) and of the time of origin of the sound for each sharp report.

**Revendications**

1. Procédé pour localiser des détonations, dans lequel, dans au moins deux zones de mesurage (MS; MS1, MS2, MS3) équipées d'au moins deux détecteurs acoustiques (M1, M2, M3), il s'opère une détection des vibrations de pression acoustique de chaque détonation, une détermination des différences temporelles de l'incidence des vibrations de pression acoustique sur les détecteurs acoustiques (M1, M2, M3) de la même zone de mesurage pour chaque zone de mesurage (MS; MS1, MS2, MS3), puis une transmission des différences temporelles correspondantes à une zone centrale d'interprétation (AS), en vue de déterminer le lieu d'origine (SO) de la détonation, procédé caractérisé par le fait que l'heure de l'incidence des vibrations de pression acoustique de chaque détonation est constatée et mémorisée sur les détecteurs acoustiques individuels (M1, M2, M3) de chaque zone de mesurage (MS; MS1, MS2, MS3); par le fait que les différences temporelles de l'incidence des vibrations de pression acoustiques sur les détecteurs acoustiques (M1, M2, M3) de la même zone de mesurage (MS; MS1, MS2, MS3) sont mémorisées après la détermination pour chaque zone de mesurage (MS); et par le fait que, à l'emplacement de chaque zone de mesurage (MS; MS1, MS2, MS3), la direction (r; r1, r2, r3) d'incidence acoustique et le temps d'incidence acoustique de la zone de mesurage considérée (MS; MS1, MS2, MS3) sont déterminés électroniquement sur la base des données relatives à l'heure et aux différences temporelles, après quoi ces données sont retransmises à la zone centrale d'interprétation (AS) en vue de déterminer le lieu d'origine acoustique (SO) et l'instant de cette origine acoustique.

2. Procédé selon la revendication 1, caractérisé par le fait que, dans chaque zone de mesurage (MS; MS1, MS2, MS3), trois microphones (M1, M2, M3) sont implantés selon une disposition géométrique déterminée, par exemple aux sommets d'un triangle équilatéral horizontal ayant une longueur de côté comprise entre 5 et 30 m; et par le fait que cette disposition est orientée d'une manière déterminée par rapport à la direction Nord.

3. Procédé selon la revendication 1 ou 2, caractérisé par le fait que, dans chaque zone de mesurage (MS; MS1, MS2, MS3), les vibrations de pression acoustique reçues par les détecteurs acoustiques (M1, M2, M3) sont mémorisées; par le fait que l'incidence de ces vibrations sur le détecteur acoustique (M2) situé le plus près du lieu d'origine acoustique (SO) active la zone de mesurage (MS; MS3); et par le fait que, sur cette base, les différences temporelles entre l'incidence des vibrations sur ce détecteur acoustique (M2) et l'incidence des mêmes vibrations sur les autres détecteurs acoustiques (M1, M3) sont déterminées par décalage de deux vibrations respectives mémorisées de pression acoustique le long de l'axe du temps, jusqu'à ce qu'elles soient au moins approximativement superposées.

4. Procédé selon l'une des revendications 1 à 3, caractérisé par le fait qu'une autre détecteur acoustique est implanté au-dessus de chaque zone de mesurage (MS; MS1, MS2, MS3), par exemple à une hauteur de 2 à 10 mètres au-dessus de cette zone de mesurage (MS; MS1, MS2, MS3); et par le fait que, lorsque les vibrations de pression acoustique atteignent cet autre détecteur acoustique plus tôt que tous les autres détecteurs acoustiques (M1, M2, M3) de la même zone de mesurage (MS; MS1, MS2, MS3), l'interprétation de ces vibrations de pression acoustique est interrompue dans cette zone de mesurage (MS; MS1, MS2, MS3) et les données mémorisées sont effacées.

5. Procédé selon l'une des revendications 1 à 4, caractérisé par le fait que, à l'emplacement de chaque zone de mesurage (MS; MS1, MS2, MS3), des données supplémentaires sont établies et sont transmises à la zone centrale d'interprétation (AS), par exemple des données relatives à la force du vent, à la direction du vent et à la nature des vibrations de pression acoustique incidentes.

6. Procédé selon l'une des revendications 1 à 5, caractérisé par le fait qu'un microprocesseur (MP) est utilisé pour déterminer les données transmises à la zone centrale d'interprétation (AS) par chaque zone de mesurage (MS; MS1, MS2, MS3).

7. Procédé selon l'une des revendications 1 à 6, caractérisé par le fait que la transmission des données de chaque zone de mesurage (MS; MS1, MS2, MS3) à la zone centrale d'interprétation (AS) a lieu par radio (FK) ou par câble (BR).

8. Procédé selon l'une des revendications 1 à 7, caractérisé par le fait que l'interprétation des données transmises à la zone centrale d'interprétation (AS) par chaque zone de mesurage (MS; MS1, MS2, MS3) est effectuée d'une manière ordonnée en fonction de laps de temps se chevauchant mutuellement, et de cases adjacentes du terrain détecté par les zones de mesurage (MS; MS1, MS2, MS3).

9. Procédé selon la revendication 8, caractérisé par le fait qu'un laps de temps accuse une durée comprise entre 1 et 10 secondes, le chevauchement de deux laps de temps respectifs étant de 0,1 à 2 secondes; et par le fait que le terrain détecté est subdivisé en un nombre de 3 à 24 cases approximativement rectangulaires.

10. Procédé selon la revendication 8 ou 9, caractérisé par le fait qu'il s'opère dans la zone centrale d'interprétation (AS), pour toutes les directions (r; r1, r2, r3) d'incidence acoustique des vibrations de pression acoustique affectant une case déterminée, un processus visant à établir si un point temporel d'origine acoustique au moins approximativement identique se trouve dans cette case pour plus d'une zone mesurable; et par le fait que, en présence d'un point temporel d'origine acoustique au moins approximativement identique, les données caractéristiques de localisation, par exemple les coordonnées du point d'intersection des directions considérées (r; r1, r2, r3) d'incidence acoustique sont délivrées à un appareil de sortie, par exemple un écran de visualisation (BS1, BS2) et/ou une imprimante (PK), conjointement à l'heure déterminée de l'origine acoustique.

11. Dispositif pour la mise en œuvre du procédé de localisation de détonations selon la revendication 1, comprenant plusieurs zones de mesurage (MS; MS1, MS2, MS3) situées en des emplacements différents, dont chacune comprend au moins deux détecteurs acoustiques (M1, M2, M3) implantés selon un agencement déterminé à des distances qui sont très petites par comparaison avec l'éloignement du lieu d'origine (SO) de la détonation; un dispositif électronique raccordé à ces détecteurs acoustiques pour déterminer les différences temporelles de l'incidence des vibrations de pression acoustique sur les détecteurs acoustiques (M1, M2, M3) de la même zone de mesurage; ainsi que des moyens (FK, DR) pour transmettre les données déterminées à une zone centrale d'interprétation (AS), cette zone centrale d'interprétation (AS) englobant des moyens pour recevoir les données transmises par chaque zone de mesurage (MS; MS1, MS2, MS3); des moyens (BS1, BS2, PK) pour enregistrer les résultats de la détermination; ainsi que des moyens pour calculer le lieu d'origine acoustique (SO), dispositif caractérisé par le fait que le dispositif électronique de chaque zone de mesurage (MS; MS1, MS2, MS3) consiste, à chaque fois, en un circuit électronique intégré de calcul et de mémorisation (MP), qui est également réalisé pour déterminer l'heure de l'incidence des vibrations de pression acoustique de la détonation sur les détecteurs acoustiques (M1, M2, M3), ainsi que pour déterminer la direction (r; r1, r2, r3) d'incidence acoustique; et par le fait que la zone d'interprétation (AS) renferme un autre circuit électronique intégré de calcul et de mémorisation (MC), en vue de déterminer le lieu d'origine acoustique (SO) et l'instant d'origine acoustique de chaque détonation.

MS

M 2

r

S(x,y)

M3        M1

AD

WS        IF        MP

MD

Fig. 1

FK        DR

AS    AS

Fig. 2

SO

r1        r2        r3

M2

M3        M1

M2

M3        M1

MS1

M 2

M3        M1

MS 2

M2

M3        M1

MS3

AS

0 064 477

Fig.3